# FASCICULE DE BREVET EUROPEEN

(11) **EP 2 154 624 B1**
(45) Date de publication et mention de la délivrance du brevet: **27.09.2017**
(21) Numéro de dépôt: 09010051.2
(22) Date de dépôt: 04.08.2009
(51) Int. Cl.: G06F 21/52

(54) **Procéde de sécurisation d'une transaction exécutée au moyen d'un dispositif portable programmable**
Sicherungsverfahren einer Transaktion, die mit einem programmierbaren tragbaren Gerät ausgeführt wird
Method for securing a transaction conducted using a programmable portable device

(30) Priorité: 05.08.2008 FR 0804450
(43) Date de publication de la demande: 17.02.2010
(73) Titulaire: Inside Secure, 13590 Meyreuil (FR)
(72) Inventeur: Blanchet, Jean-Bernard, 13100 Aix en Provence (FR)
(74) Mandataire: Marchand, André

(56) Documents cités:
- WO-A-01/92996
- DE-A1- 19 539 801
- US-A1- 2007 113 120

## Description

La présente invention concerne un dispositif de transaction pour réaliser une transaction avec un dispositif externe par une liaison de communication.

La présente invention concerne également un procédé de sécurisation d'une transaction entre un dispositif de transaction et un dispositif externe, en particulier une transaction exécutée avec un dispositif portable programmable.

De nos jours, il est possible de réaliser des transactions grâce à des dispositifs portables communs comme par exemple des téléphones portables ou des assistants numériques personnels (PDA). En effet, les moyens de communication sans fil ou sans contact peuvent facilement être intégrés dans de tels dispositifs portables pour établir une communication sans fil ou sans contact avec un dispositif externe, afin de réaliser des transactions.

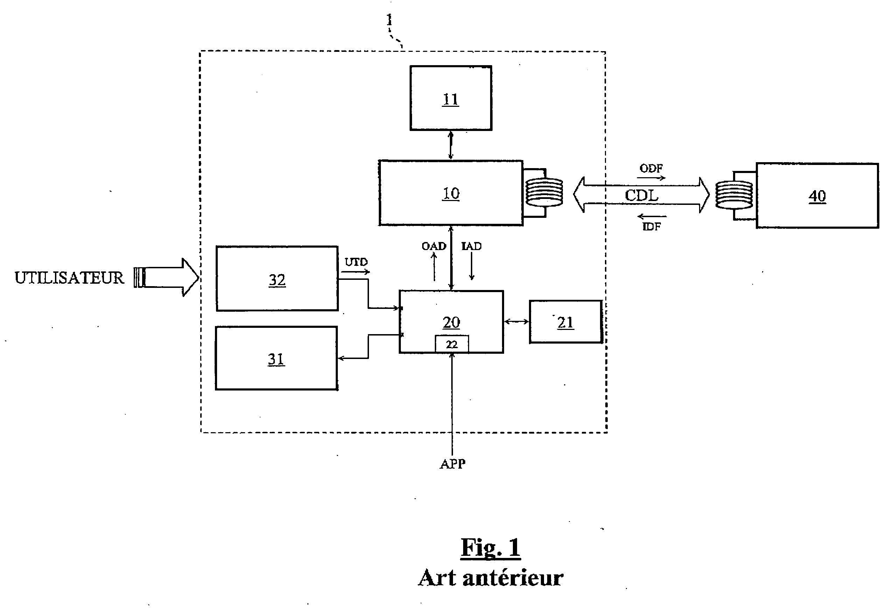

La figure 1 illustre un exemple d'un dispositif de transaction conventionnel 1 doté de fonctionnalités de communication NFC (Near Field Communication ou communication à champ proche). Essentiellement, le dispositif de transaction comprend un contrôleur de communication NFC 10, un processeur d'application 20, un dispositif d'affichage 31, et un dispositif d'entrée 32 relié au processeur d'application 20.

Le contrôleur de communication NFC 10 comprend une bobine d'antenne permettant d'établir une liaison de données sans contact CDL avec un dispositif NFC externe 40, par exemple un terminal de paiement ou un distributeur. Le dispositif externe 40 est également équipé d'une bobine d'antenne et le dispositif externe et le contrôleur de communication NFC peuvent tous deux échanger des données par couplage inductif.

Dans le dispositif de transaction 1, le contrôleur de communication 10 est couplé avec au moins une mémoire de données et de programme 11 dans laquelle un programme exécuté par le contrôleur est stocké. Le processeur d'application 20 est couplé avec au moins une mémoire de données et de programme 21 dans laquelle des programmes d'application sont stockés.

En outre, le dispositif de transaction 1 comprend typiquement une autre interface de communication 22 par laquelle il peut recevoir des programmes d'application APP stockés dans la mémoire 21 et exécutés par le processeur d'application 20. On suppose ici qu'au moins un programme d'application APP a été téléchargé via la liaison de données sans contact CDL, afin de gérer une transaction.

De par sa nature, un tel dispositif portable commun est bien moins sécurisé qu'un dispositif de paiement sécurisé et certifié, comme ceux que l'on trouve dans les magasins ou les banques. En particulier, le processeur d'application 20, dans lequel des programmes d'application APP peuvent être téléchargés et installés à l'aide de l'interface de communication 22, peut contenir des logiciels malveillants. Ces logiciels malveillants peuvent être conçus pour intercepter ou corrompre des données de transaction dans les applications payantes comme le paiement d'une facture, un retrait d'argent dans un distributeur, un paiement pour accéder à un endroit payant (métro, musée, boîte de nuit,...), etc. Par conséquent, une telle corruption de données de transaction peut conduire au paiement d'une somme plus importante que celle attendue par l'utilisateur.

A titre d'exemple, une transaction est initiée et une connexion (liaison de données CDL) est établie entre le dispositif de transaction 1 et le dispositif externe 40. Le dispositif externe envoie les données de transaction au dispositif de transaction. La somme est affichée sur le dispositif d'affichage 31 et l'utilisateur est requis de confirmer s'il accepte de payer le montant indiqué en entrant un accusé via le dispositif d'entrée 32 (par exemple en choisissant « Oui » ou « Non » ou en entrant un code personnel à titre d'acquiescement, ou les deux). Le processeur d'application envoie ensuite cet accusé au dispositif externe afin de terminer la transaction. Les logiciels malveillants peuvent corrompre le programme d'application APP de telle sorte que la transaction est exécutée avec des données de transaction différentes de celles affichées et/ou acceptées par l'utilisateur. Par exemple, une transaction pour une somme de 1000 € peut être initiée par le logiciel malveillant alors qu'une somme de 10 € est affichée à l'utilisateur. Dans ce cas, l'utilisateur paie les 1000 € au lieu des 10 € qu'il a accepté de payer.

Il peut donc être souhaité de prévoir un procédé de sécurisation d'une transaction exécutée avec un dispositif de transaction pouvant être corrompu par un logiciel malveillant, en particulier une transaction exécutée avec un dispositif portable programmable.

Le document WO 01/92996 décrit un procédé de sécurisation d'une transaction entre une carte à puce et un dispositif externe tel un ordinateur personnel, dans lequel l'utilisateur doit confirmer à l'aide d'un clavier les données de transaction. A cet effet, la carte est placée dans un mode sécurisé dans lequel les données fournies par le clavier ne transitent pas par l'ordinateur personnel. La carte refuse d'exécuter la transaction si les données de transaction ne sont pas identiques à celles confirmées par l'utilisateur. Ce procédé permet de protéger la carte d'un logiciel malveillant situé dans le dispositif externe.

Un mode de réalisation de l'invention concerne un procédé de sécurisation d'une transaction entre un dispositif de transaction et un dispositif externe, le dispositif de transaction comprenant un contrôleur de communication, un processeur d'application, et un dispositif d'entrée, la transaction comprenant des étapes d'échange de données d'application entre le processeur d'application et le dispositif externe, par l'intermédiaire du contrôleur de communication, une étape d'envoi de données de transaction du dispositif de transaction vers le dispositif externe ou du dispositif externe vers le dispositif de transaction, et une étape consistant à demander à l'utilisateur d'entrer des données de transaction approuvées, via le dispositif d'entrée, procédé comprenant des étapes conduites par le contrôleur de communication, consistant à : capturer et mémoriser les données de transaction approuvées entrées par l'utilisateur, surveiller les données de transaction à envoyer au dispositif externe ou reçues du dispositif externe, et refuser d'envoyer les données de transaction au dispositif externe si elles sont différentes des données de transaction approuvées, ou rejeter les données de transaction reçues si elles sont différentes des données de transaction approuvées.

Selon un mode de réalisation, le procédé comprend une étape consistant à interrompre la transaction au lieu d'empêcher les données de transaction d'être envoyées ou de rejeter les données de transaction reçues.

Selon un mode de réalisation, le procédé comprend une étape consistant à appliquer au contrôleur de communication une commande lui demandant de capturer et mémoriser les données de transaction approuvées, avant de demander à l'utilisateur d'entrer des données de transaction approuvées.

Selon un mode de réalisation, le procédé comprend les étapes consistant à appliquer une commande spécifique au contrôleur de communication lorsque des données de transaction doivent être envoyées au dispositif externe, et fournir au contrôleur de communication les données de transaction à envoyer, configurer le contrôleur de communication de telle sorte qu'en réponse à la commande il surveille les données de transaction spécifique, puis envoie les données de transaction au moyen d'une encapsulation spécifique ou de données d'accompagnement si les données de transaction à envoyer sont identiques aux données de transaction approuvées.

Selon un mode de réalisation, le procédé comprend une étape consistant à configurer le dispositif externe de telle sorte qu'il refuse les données de transaction qui ne sont pas encapsulées dans des données d'encapsulation spécifiques ou accompagnées de données d'accompagnement spécifiques

Selon un mode de réalisation, le procédé comprend les étapes consistant à envoyer des données d'application au dispositif de transaction au moyen d'une trame de données spécifique, en réponse à la réception de la trame de données spécifique, comparer les données de transaction présentes dans la trame spécifique aux données de transaction approuvées, au moyen du contrôleur de communication.

Un mode de réalisation de l'invention concerne également un dispositif de transaction comprenant un contrôleur de communication, un processeur d'application pour réaliser des transactions avec un dispositif externe par l'intermédiaire du contrôleur de communication, et un dispositif d'entrée, le dispositif de transaction étant configuré pour demander à l'utilisateur d'entrer des données de transaction approuvées via le dispositif d'entrée lors d'une transaction, le contrôleur de communication étant configuré pour : capturer et mémoriser les données de transaction approuvées entrées par l'utilisateur, surveiller les données de transaction à envoyer au dispositif externe ou reçues du dispositif externe, et refuser d'envoyer les données de transaction au dispositif externe si elles sont différentes des données de transaction approuvées, ou rejeter les données de transaction reçues si elles sont différentes des données de transaction approuvées.

Selon un mode de réalisation, le contrôleur de communication est configuré pour interrompre une transaction lorsque les données de transaction à envoyer sont différentes des données de transaction approuvées, ou lorsque les données de transaction reçues sont différentes des données de transaction approuvées.

Selon un mode de réalisation, le processeur d'application est configuré pour demander à l'utilisateur d'entrer des données de transaction approuvées et pour appliquer au contrôleur de communication une commande lui demandant de capturer et de mémoriser les données de transaction approuvées, avant de demander à l'utilisateur d'entrer des données de transaction approuvées.

Selon un mode de réalisation, le processeur d'application est configuré pour appliquer une commande spécifique au contrôleur de communication lorsque des données de transaction doivent être envoyées au dispositif externe, et fournir au contrôleur de communication les données de transaction à envoyer, et le contrôleur de communication est configuré pour surveiller les données de transaction en réponse à la commande spécifique, puis envoyer les données de transaction au moyen d'une encapsulation spécifique ou de données d'accompagnement si les données de transaction à envoyer sont identiques aux données de transaction approuvées.

Selon un mode de réalisation, le contrôleur de communication est configuré pour, en réponse à la réception d'une trame de données spécifique comprenant des données de transaction, comparer les données de transaction présentes dans la trame spécifique aux données de transaction approuvées.

Selon un mode de réalisation, le contrôleur de communication est un contrôleur NFC et le processeur d'application est un processeur de bande de base d'un téléphone portable ou le processeur principal d'un assistant numérique personnel.

Un mode de réalisation de l'invention concerne également un système de transaction, comprenant un dispositif de transaction selon un mode de réalisation de l'invention, et un dispositif externe configuré pour réaliser une transactions avec le dispositif de transaction.

Selon un mode de réalisation, le dispositif externe est configuré pour refuser des données de transaction qui ne sont pas encapsulées dans des données d'encapsulation spécifiques ou accompagnées de données d'accompagnement spécifiques.

Selon un mode de réalisation, le dispositif externe est configuré pour envoyer des données d'application au dispositif de transaction au moyen d'une trame de données spécifique.

Des modes de réalisation de l'invention seront décrits plus avant dans la description qui suit, faite à titre non limitatif en relation avec les figures jointes parmi lesquelles :
- la figure 1 précédemment décrite illustre une architecture conventionnelle d'un dispositif de transaction commun,
- la figure 2 illustre un mode de réalisation d'un dispositif de transaction selon la présente invention,
- Les figures 3A et 3B sont des organigrammes simplifiés décrivant un mode de réalisation d'un procédé de sécurisation d'une transaction selon la présente invention,
- la figure 4 est un organigramme simplifié décrivant un second mode de réalisation d'un procédé de sécurisation d'une transaction selon la présente invention,
- la figure 5 est un organigramme simplifié décrivant une variante du mode de réalisation illustré sur les figures 3B et 4,
- les figures 6A et 6B sont des organigrammes simplifiés décrivant un troisième mode de réalisation d'un procédé de sécurisation d'une transaction selon la présente invention, et
- la figure 7 illustre un autre mode de réalisation d'un dispositif de transaction selon la présente invention.

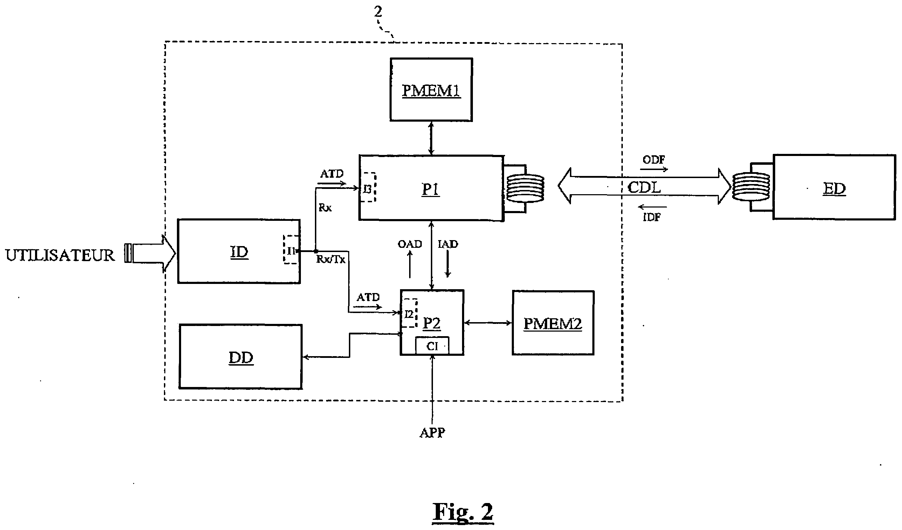

La figure 2 illustre schématiquement, sous forme de blocs, un mode de réalisation d'un dispositif de transaction 2 selon la présente invention, par exemple un téléphone portable ou un PDA. A l'instar du dispositif de transaction 1 décrit ci-dessus en relation avec à figure 1, le dispositif de transaction 2 comprend un contrôleur de communication P1 et au moins un processeur d'application P2. Le contrôleur de communication P1 est par exemple un contrôleur NFC équipé d'une bobine d'antenne capable d'envoyer des données à et de recevoir des données d'un dispositif externe ED, via une liaison de données sans contact CDL. Le dispositif ED peut être tout type de portail interactif NFC et est également équipé d'une bobine d'antenne. Le contrôleur de communication P1 est couplé avec au moins une mémoire de données et de programme PMEM1 dans laquelle un programme exécuté par le contrôleur de communication est stocké. De la même façon, le processeur d'application P2 est couplé à au moins une mémoire de données et de programme PMEM2, et peut par exemple être le processeur de bande de base d'un téléphone portable ou le processeur principal d'un PDA. D'autres processeurs hôtes, non illustrés, comme une SIM (Subscriber Identity Module) ou un autre élément sécurisé peuvent être inclus dans le dispositif de transaction et connectés au contrôleur de communication P1.

Le dispositif de transaction 2 comprend également un dispositif d'affichage DD et un dispositif d'entrée ID qui sont liés au processeur d'application P2. Le dispositif d'entrée ID peut être par exemple un clavier, un microphone, une entrée biométrique, une combinaison de ces éléments, ou tout autre moyen permettant à l'utilisateur d'entrer des informations.

Enfin, le dispositif de transaction comprend au moins une interface de communication, comme par exemple une interface sans fil (Wifi), une interface radio du type GSM, un port USB, un port Ethernet, etc., ou une combinaison de ces éléments, qui est représentée schématiquement en tant qu'interface de communication CI du processeur d'application 20. Au moyen de cette interface, le dispositif de transaction 2 peut recevoir des programmes d'application APP qui sont stockés dans la mémoire PMEM2 et exécutés par le processeur d'application 20.

Comme indiqué ci-dessus, un programme d'application peut contenir un logiciel malveillant conçu pour corrompre des données de transaction.

D'autre part, la mémoire PMEM1 est réputée être incorruptible pour des logiciels malveillants en ce qu'elle est programmée en usine et n'est pas accessible pour l'utilisateur. Des modes de réalisation de la présente invention se basent sur cette observation, et s'appuient sur le contrôleur de communication P1 pour vérifier que les données de transaction échangées entre le processeur d'application P2 et le dispositif externe ED ne sont pas corrompues.

Selon un aspect de modes de réalisation de la présente invention, le contrôleur P1 est également relié au dispositif d'entrée ID de telle sorte qu'il puisse également capturer des données entrées par l'utilisateur. Par exemple, le dispositif d'entrée ID et le processeur d'application P2 peuvent tous deux comprendre une interface UART (Universal Asynchronous Receiver/Transmitter) I1, I2 respectivement, les deux interfaces étant interconnectées au moyen de deux conducteurs Tx, Rx. Dans ce cas, le contrôleur de communication P1 comprend également une interface UART I3 qui est au moins connectée au connecteur Rx de l'interface I1, afin de recevoir des données émises par le dispositif d'entrée ID.

Selon un second aspect de modes de réalisation de la présente invention, lorsqu'une transaction impliquant des données de transaction est exécutée, l'utilisateur d'entrer les données de transaction, par exemple la somme qu'il souhaite payer, qui seront désignées dans ce qui suit « données de transaction approuvées » ATD (Acknowledged Transaction data).

Selon un troisième aspect de modes de réalisation de la présente invention, le contrôleur de communication P1 est configuré pour surveiller des données de transaction TD envoyées par le dispositif externe ED ou reçues par l'intermédiaire du dispositif externe, et intervenir dans la transaction en cours si les données de transaction TD sont différentes des données de transaction approuvées ATD entrées par l'utilisateur. Comme on le verra ci-dessous au moyen d'exemples, « l'intervention » du contrôleur de communication peut consister à interrompre la transaction, à refuser d'envoyer des données au dispositif externe, etc., et plus généralement à réaliser toute action dont le but est de protéger l'utilisateur de transactions impliquant des données de transaction différentes de celles approuvées par l'utilisateur.

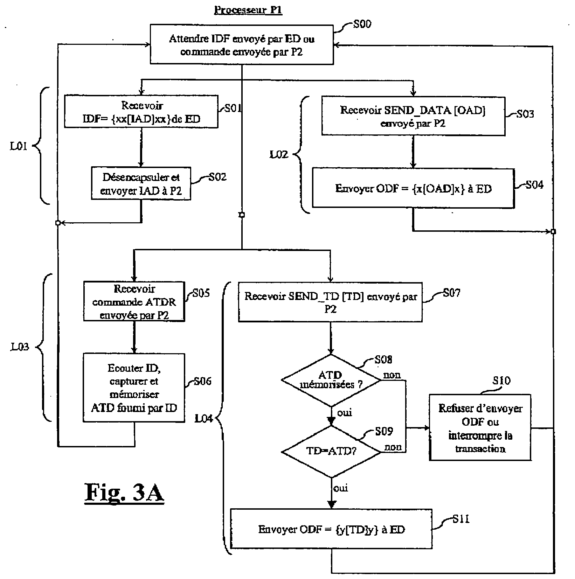

Différents exemples d'implémentation de ces aspects de modes de réalisation de la présente invention vont maintenant être décrits en référence aux figures 3A, 3B, 4, 5, 6A, et 6B.

Dans ces modes de réalisation exemplatifs, le contrôleur P1 reçoit des trames de données entrantes IDF dans un format du type « {x(IAD]x} » envoyées par le dispositif externe ED, où IAD représente des données d'application entrantes à l'attention du processeur d'application P2 et « x » des données d'encapsulation utilisées par le contrôleur de communication P1 et le dispositif externe ED pour gérer la communication. Par exemple, les données d'encapsulation peuvent comprendre un début de trame SOF (Start of Frame), une fin de trame EOF (End Of Frame), des commandes NFC, une signature CRC (Cyclic Redundancy Check, ou contrôle de redondance cyclique), etc. Les données d'application entrantes IAD, inclues dans les trames de données entrantes IDF, sont désencapsulées par le contrôleur de communication P1 et fournies au processeur d'application P2.

De la même façon, le contrôleur P1 envoie au dispositif externe ED des trames de données sortantes ODF dans un format du type « {x[OAD]x} », où OAD représente des données d'application sortantes et « x » des données d'encapsulation. Les données d'application sortantes OAD sont fournies par le processeur d'application P2 au contrôleur de communication P1 au moyen de commandes du type SEND_DATA [OAD].

Afin de simplifier le langage de la présente description, le contrôleur de communication sera appelé « P1 », le processeur d'application sera appelé « P2 », et le dispositif externe appelé « ED ». Une trame de données entrantes sera appelée une « IDF » et une trame de données sortantes une « ODF ». Les données d'application entrantes seront appelées des « IAD » et les données d'application sortantes des « OAD ». Les données de transaction approuvées seront appelées des « ATD ».

### Premier exemple de réalisation

La figure 3A est un organigramme simplifié décrivant des étapes de traitement exécutées par P1 lors d'une transaction. On observe différentes boucles de traitement :
- une boucle de traitement L01, comprenant des étapes S01 et S02,
- une boucle de traitement L02 comprenant des étapes S03 et S04,
- une boucle de traitement L03 comprenant des étapes S05 et S06, et
- une boucle de traitement L04 comprenant des étapes S07 à S11.

Les boucles L01 et L02 comprennent des étapes de traitement conventionnelles et les boucles L03 et L04 sont prévues pour implémenter des aspects de ce mode de réalisation de l'invention. Ces boucles de traitement sont rattachées à une étape d'attente initiale S00 dans laquelle le contrôleur P1 attend une trame de données entrantes IDF émise par ED ou une commande venant de P2.

La boucle de traitement L01 est exécutée lorsque P1 reçoit une IDF émise par ED, c'est-à-dire des données d'application entrantes encapsulées {x[IAD]x}, à l'étape 01. Puis P1 désencapsule les IAD et les envoie à P2 à l'étape S02.

La boucle de traitement L02 est exécutée Lorsque P1 reçoit une commande SEND_DATA [OAD] envoyée par P2, à l'étape S03. Puis P1 envoie à ED une ODF comprenant les OAD encapsulées {x[OAD]x}, à l'étape 04.

La boucle de traitement L03 est exécutée lorsque P1 reçoit une commande spécifique ATDR (Agreed Transaction Data Request, soit Requête en communication de données de transaction approuvées) envoyée par P2, à l'étape S05. Cette commande informe P1 que P2 va demander à l'utilisateur d'entrer les ATD au moyen du dispositif d'entrée ID. En réponse à cette commande, P1 écoute le dispositif d'entrée ID puis capture et mémorise les données fournies par le dispositif ID en tant que données de transaction approuvées ATD entrées par l'utilisateur.

La boucle de traitement L04 est exécutée lorsque P1 reçoit de P2 une commande spécifique SEND_TD [TD] comprenant des données de transaction TD, à l'étape S07. Cette commande demande à P1 d'envoyer à ED une ODF spécifique dans un format du type {y[TD]y} ou {y[TD]x} ou {x[TD]y}, où « y » représente des données encapsulées différentes des données d'encapsulation « x » habituelles.

Lorsqu'une telle commande est reçue, P1 vérifie d'abord si les ATD ont été mémorisées (étape S08), c'est-à-dire si la boucle de traitement L03 a déjà été exécutée. Deux situations peuvent se produire :
1) Si P1 ne détient pas de données de transaction approuvées mémorisées ATD, la commande reçue SEND_TD est considérée comme suspecte et est rejetée. De plus, si l'on souhaite un niveau de sécurité supérieur, la réception d'une telle commande lorsqu'aucune donnée de transaction approuvée n'a été mémorisée peut être considérée comme une brèche inacceptable dans la sécurité de la transaction et par conséquent P1 peut être configuré pour provoquer une interruption complète de la transaction au lieu de simplement rejeter la commande. Ainsi, P1 passe à l'étape S10 dans laquelle il envoie à P2 l'information indiquant qu'il refuse d'envoyer l'ODF contenant les données de transaction non approuvées TD ou dans laquelle il interrompt complètement la transaction. Puis P1 retourne à l'étape d'attente S00.
2) Si les données de transaction approuvées ATD ont été mémorisées, P1 vérifie, si les données de transaction TD présentes dans la commande sont identiques aux données ADT. Si elles ne sont pas identiques, P1 passe à l'étape S10 pour indiquer à P2 qu'il refuse d'envoyer l'ODF contenant les données de transaction non approuvées TD ou pour interrompre la transaction. Puis P1 retourne à l'étape d'attente S00. Si les données de transaction approuvées ATD et les données de transaction TD sont identiques, P1 envoie l'ODF à ED sous la forme {y[TD]y} ou {y[TD]x} ou {x[TD]y}, puis retourne à l'étape S00.

L'homme de l'art notera qu'un mécanisme de sécurité supplémentaire peut être prévu dans le dispositif externe ED pour garantir qu'aucune donnée de transaction TD ne sera acceptée si elle n'est pas encapsulée dans une trame de données contenant les données d'encapsulation spécifiques «y». Dans un autre mode de réalisation, il peut être prévu que le terminal ED génère une valeur aléatoire ou « jeton » au début d'une transaction et l'envoie à P1, et que les données de transaction ne sont acceptées par le dispositif externe ED que si elles sont accompagnées de ce « jeton ».

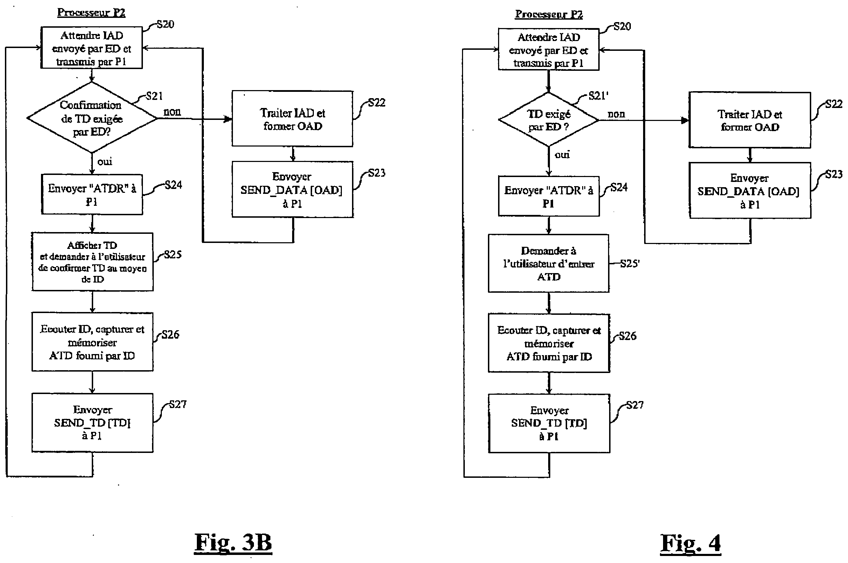

La figure 3B est un organigramme simplifié décrivant des étapes de traitement exécutées par P2 lors d'une transaction, ces étapes correspondant à celles qui viennent d'être décrites en relation avec la figure 3A. Des étapes S20 à S27 sont représentées. A l'étape S20, P2 attend des données d'application entrantes IAD, qui sont transmises par P1 après désencapsulation (étape S02, figure 3A). Lorsque les IAD sont reçues, P2 passe à l'étape S21 dans laquelle il analyse les IAD et vérifie si les données de transaction TD sont demandées par le dispositif externe ED. Deux situations peuvent se produire :
1) Si à cette étape de la transaction aucune donnée de transaction n'est exigée par le dispositif externe ED, P2 passe à l'étape S22 au cours de laquelle il traite les IAD et forme des données d'application sortantes OAD à l'attention de ED. Ce traitement des IAD, jusqu'à la formation des OAD, peut comprendre différentes sous-étapes qui ne sont pas illustrées pour simplifier l'organigramme. En particulier, ces sous-étapes peuvent comprendre l'affichage de différentes informations et/ou données par l'utilisateur au moyen du dispositif d'affichage DD et la capture de données entrées par l'utilisateur au moyen du dispositif d'entrée ID. Dans la mesure où les données entrées par l'utilisateur ne sont pas des données de transaction sensibles, il n'est pas nécessaire que P1 soit impliqué dans ce processus. Ensuite, à l'étape S23, P2 envoie la commande SEND_DATA [OAD] à P1 (qui est traitée par P1 aux étapes S03, S04, figure 3A) puis P2 retourne à l'étape d'attente S20.
2) Si les IAD contiennent une requête de transmission de données de transaction TD, P2 passe à l'étape S24 au cours de laquelle il envoie la commande ATDR à P1 (Cf. étape S05 de la figure 3A). Puis P2 passe à l'étape S25 au cours de laquelle il utilise le dispositif d'affichage DD pour demander à l'utilisateur d'entrer les données de transaction approuvées ATD. A l'étape S26, qui est exécutée simultanément à l'étape S06 de la figure 3A, P2 écoute le dispositif d'entrée ID puis capture et mémorise les données de transaction approuvées ATD. A l'étape S27, qui correspond à l'étape S07 de la figure 3A, P2 envoie la commande SEND_TD [TD] à P1. Les données de transaction TD incluses dans cette commande sont supposées être les données de transaction approuvées ATD entrées par l'utilisateur. Si un logiciel malveillant dans la mémoire PMEM2 de P2 essaye de corrompre les données de transaction présentes dans la commande SEND_TD, le contrôleur de communication détectera les données de transaction corrompues à l'étape S08 ou S09 de la figure 3A.

### Second exemple de réalisation

Le processus de transaction qui vient d'être décrit comprend une confirmation des données de transaction par l'utilisateur à l'étape S25. La figure 4 est un organigramme simplifié illustrant des étapes de traitement exécutées par P2 dans un second mode de réalisation du procédé de sécurisation d'une transaction selon la présente invention. Cet organigramme est identique a l'organigramme de la figure 3B, sauf que les étapes S21 et S25 sont remplacées par les étapes S21' et S25', respectivement. Dans ce mode de réalisation, le dispositif externe ED demande simplement à l'utilisateur d'indiquer les données de transaction impliquées dans la transaction en cours. Cela peut se produire par exemple lorsque le dispositif de transaction est utilisé pour retirer de l'argent à un distributeur sans demander à l'utilisateur d'entrer le montant à retirer sur un dispositif d'entrée du distributeur. Dans ce cas, le dispositif d'entrée ID du dispositif de transaction est utilisé comme dispositif d'entrée du distributeur. Ainsi, à l'étape S21', les IAD reçues par P2 contiennent uniquement une requête demandant que les données de transaction impliquées dans la transaction soient communiquées au dispositif externe. A l'étape S25', P2 demande à l'utilisateur d'entrer les données de transaction souhaitées au lieu de lui demander de confirmer les données de transaction.

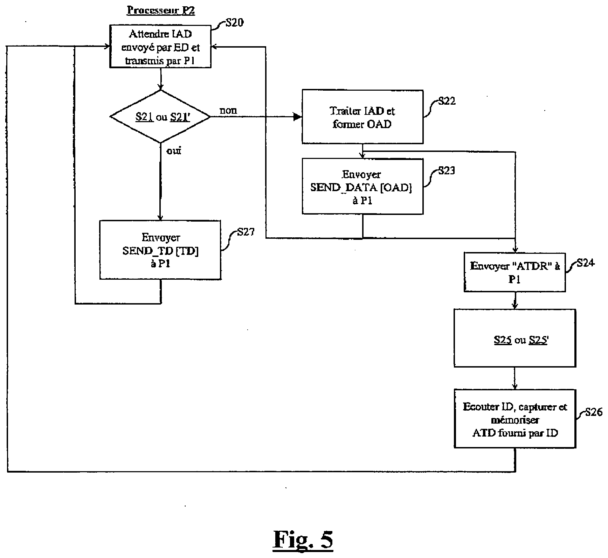

Il apparaîtra clairement à l'homme de l'art que différentes variantes des modes de réalisation décrits ci-dessus peuvent être prévues. Par exemple, tel qu'illustré sur la figure 5, le processeur peut retourner à l'étape d'attente S20 après avoir capturé les ATD à l'étape S26, au lieu de passer à l'étape S27. Dans ce cas, les étapes S24-S26 peuvent être exécutées à l'avance, avant que P2 ne reçoive de ED une requête de confirmation des TD (étape S21) ou une requête d'envoi des TD (étape S21'), et l'étape S27 peut être exécutée lorsque P2 reçoit la requête de confirmation des TD (étape S21) ou d'envoi des TD (étape S21').

### Troisième exemple de réalisation

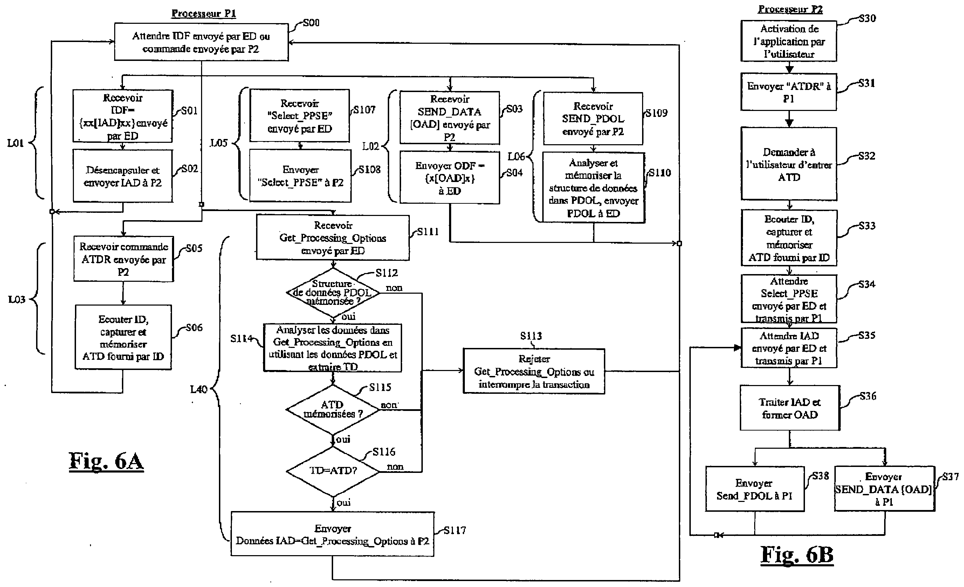

Les figures 6A et 6B sont des organigrammes simplifiés illustrant un mode de réalisation de la présente invention en relation avec les spécifications de paiement « EMV Book 3 » (http://www.emvco.com/documents/ specification/view/EMVv4.1Book3ApplicationSpecification.p df).

La figure 6A illustre des étapes de traitement exécutées par le contrôleur de communication P1 lors d'une transaction EMV comprenant des aspects du procédé de la présente invention. Dans ce mode de réalisation, le dispositif de transaction est utilisé comme carte de paiement compatible avec les spécifications EMV. On suppose que le dispositif externe ED est également compatible avec les spécifications EMV et est par exemple un terminal EMV.

Ce mode de réalisation comprend l'utilisation d'une chaîne de données spécifique appelée « PDOL » (Processing Options Data Object List) qui est envoyée au dispositif externe ED par le dispositif de transaction pour définir la structure des champs présents dans une commande appelée « Get_Processing_Options » qui doit être envoyée par le dispositif externe pour communiquer les données de transaction. Comme défini dans les spécifications EMV, PDOL est une liste de balises et de longueurs d'éléments de données internes au dispositif, exigée par le dispositif de transaction pour traiter la commande Get_Processing_Options.

L'organigramme de la figure 6A contient les boucles de traitement L01, L02, et L03 qui ont été décrites ci-dessus en relation avec la figure 3A, ainsi que des boucles de traitement L04, L05 et L40.

La boucle L04 comprend des étapes S107 et S108. A l'étape S107, P1 reçoit une commande SELECT_PPSE (« Proximity Payment Systems Environment ») envoyée par le dispositif externe ED. Cette commande indique que la transaction a commencé. A l'étape S108, P1 envoie la commande SELECT à P2 pour informer P2 que la transaction est engagée.

La boucle L05 comprend des étapes S109 et S110. A l'étape S109, Pl reçoit la commande SEND_PDOL envoyée par P2. A l'étape S110, P1 analyse et mémorise la structure de données présente dans le champ PDOL puis envoie le champ PDOL à ED, par exemple au moyen d'une ODF du type {x[PDOL]x}.

La boucle L40 remplace la boucle L04 précédemment décrite et contient des étapes de sécurité selon ce mode de réalisation de l'invention. Contrairement à la boucle L04 dont le but est de détecter une corruption des données de transaction TD en surveillant les données d'application sortantes OAD qui forment ou qui comprennent de telles données de transaction TD, le but de la boucle L40 est de détecter une corruption des données de transaction en surveillant les données d'application entrantes IAD présentes dans la commande Get_Processing_Options envoyée par le dispositif externe ED.

Plus particulièrement, la boucle L40 comprend une étape S111 au cours de laquelle P1 reçoit la commande. Get_Processing_Options émise par ED, et une étape S112 au cours de laquelle P1 détermine si la structure de données PDOL a été mémorisée au préalable. Si la structure de données PDOL n'a pas été mémorisée, P1 passe à une étape S113 au cours de laquelle il interrompt la transaction ou rejette la commande Get_Processing_Options, par exemple en indiquant à ED que les données de transaction de la commande Get_Processing_Options sont invalides. Si la structure de données PDOL a été mémorisée, P1 passe à une étape S114 au cours de laquelle il analyse les données présentes dans la commande Get_Processing_Options afin d'extraire, par exemple, le montant de la transaction et la devise impliquée dans la transaction, représentant les données de transaction TD. Par exemple une valeur « 0x9F02 » indique le montant de la transaction et une valeur « 0x5F2A » indique la devise de la transaction. Puis, à l'étape S115, P1 vérifie si les données de transaction approuvées ATD ont été mémorisées, c'est-à-dire si la boucle L03 comprenant l'étape S05 (réception de la commande ATDR envoyée par P2) et l'étape S06 (écoute de ID, capture et mémorisation des ATD) a déjà été exécutée. Si l'étape S06 n'a pas été exécutée, P1 passe à l'étape S113 afin d'interrompre la transaction ou de rejeter la commande Get_Processing_Options. Si les données de transaction ATD ont été mémorisées, P1 passe à l'étape S116 au cours de laquelle il vérifie si les données de transaction TD (ici le montant et la devise) sont égales aux données de transaction approuvées ATD. Si elles ne sont pas égales, P1 passe à l'étape S113 afin d'interrompre la transaction ou de rejeter la commande Get_Processing_Options. Si elles sont égales, P1 envoie la commande Get_Processing_Options à P2 pour que P2 puisse finaliser la transaction.

La figure 6B est un organigramme illustrant des étapes de traitement exécutées par le processeur d'application P2 lors de la même transaction EMV. Lors d'étapes préliminaires non illustrées sur la figure 6B, le montant et la devise de la transaction, c'est-à-dire les données de transaction, sont communiquées verbalement ou visuellement à l'utilisateur par un détaillant ou un commerçant. Puis, l'utilisateur active le programme d'application de transaction dans le dispositif de transaction, par exemple en appuyant sur un bouton spécifique du dispositif de transaction ou en sélectionnant une option dans le menu général affiché par le dispositif d'affichage DD. Cette action conduit le processeur P2 à activer le programme d'application lors d'une étape S30. Puis P2 envoie la commande ATDR à P1 lors d'une étape S31. Lors d'une étape suivante S32, P2 demande à l'utilisateur d'entrer les données de transaction approuvées ATD. Puis, lors d'une étape S34, P2 écoute ID, puis capture et mémorise les données fournies par ID en tant que données de transaction approuvées ATD entrées par l'utilisateur (l'étape S33 se déroule simultanément à l'étape S06 sur la figure 6A). Puis, lors d'une étape suivante S34, P2 attend la commande Sélect_PPSE envoyée par le dispositif externe ED qui confirme le début de la transaction. On suppose ici que l'utilisateur, après avoir activé le programme de transaction, a amené le dispositif de transaction plus près du dispositif externe pour que les deux dispositifs soient couplés inductivement et puissent échanger des données.

Lorsque la commande Select_PPSE est reçue, P2 passe à l'étape S35 au cours de laquelle il attend les données entrantes IAD envoyées par le dispositif externe ED et reçues via P1. Lorsque les données IAD sont reçues, P2 passe à l'étape S36 au cours de laquelle il traite les IAD et forme des données d'application sortantes OAD à l'attention de ED. Après l'étape S36, et selon la nature des données d'application en cours de traitement, soit P2 passe à une étape S37 au cours de laquelle il envoie la commande SEND_DATA [OAD] à P1 (qui traite cette commande lors des étapes S03, S04 de la figure 6A), soit il passe à une étape S38 au cours de laquelle il envoie la commande SEND_PDOL à P1 (qui traite cette commande lors des étapes S109, S110 de la figure 6A), puis retourne à l'étape d'attente S35.

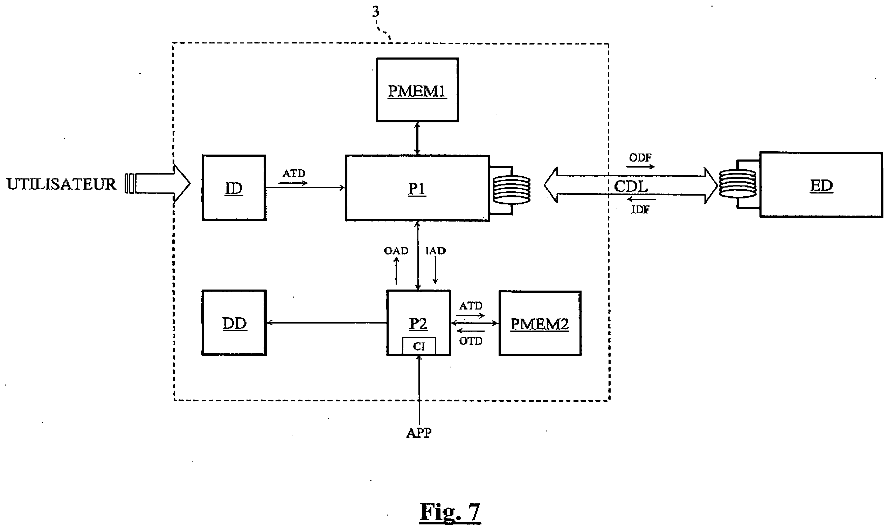

Il apparaîtra clairement à l'homme de l'art que de nombreux autres modes de réalisation du dispositif de transaction et du procédé de sécurisation d'une transaction selon l'invention peuvent être envisagés. A titre d'exemple, la figure 7 illustre un autre mode de réalisation d'un dispositif de transaction 3 selon l'invention, qui comprend les mêmes éléments que ceux décrits ci-dessus en relation avec la figure 2, c'est-à-dire le contrôleur de communication P1 et sa mémoire PMEM1, le processeur d'application P2 et sa mémoire PMEM2, le dispositif d'entrée ID et le dispositif d'affichage DD. Le dispositif de transaction se distingue du dispositif de transaction 2 en ce que le dispositif d'entrée ID est seulement connecté au contrôleur de communication P1 et est relié au processeur d'application P2 via le contrôleur P1.

Dans ce mode de réalisation du dispositif de transaction, une transaction est essentiellement traitée de la même manière que celle décrite plus haut en relation avec les figures 3A à 6B, sauf que le contrôleur de communication P1 est configuré pour transmettre au processeur d'application P2 tous types de données que l'utilisateur entre au moyen du dispositif d'entrée ID, pour qu'elles soient traitées par le processeur d'application P2, et pas seulement les données de transaction approuvées ATD. Étant donné que les architectures récentes de chipset NFC se basent sur un protocole HCI (Host Control Interface) selon lequel le contrôleur de communication P1 est configuré pour router les données entre les différents processeurs d'un chipset NFC, tel que proposé par la demande de brevet EP 1 855 389 au nom de la demanderesse, P1 peut aisément être configuré pour router jusqu'au processeur P2 les données émises par le dispositif d'entrée ID.

Les données de transaction pouvant être protégées par la présente invention sont généralement un somme d'argent et la devise correspondante, mais peuvent également être, par exemple, un nombre « d'unités » ou de « jetons » ayant une valeur monétaire, une quantité de marchandises commandées lors de la transaction, et de façon générale toute donnée essentielle impliquée dans une transaction et devant faire l'objet de l'accord de l'utilisateur.

Enfin, bien que les modes de réalisation de la présente invention aient été initialement conçus et développés pour les dispositifs portables comprenant un contrôleur de communication NFC, il apparaîtra clairement à l'homme de l'art que les procédés de transaction qui viennent d'être décrits sont applicables aux dispositifs de transaction utilisant différentes méthodes de communication avec des dispositifs externes et implémentant différentes normes de communication.

## Revendications

1. Procédé de sécurisation d'une transaction entre un dispositif de transaction (2, 3) et un dispositif externe (ED), le dispositif de transaction comprenant un contrôleur de communication (P1), un processeur d'application (P2), et un dispositif d'entrée (ID), le contrôleur de communication (P1) étant un contrôleur NFC configuré pour échanger des données avec le dispositif externe (ED) via une liaison de données sans contact (CDL), la transaction comprenant :
- des étapes d'échange de données d'application entre le processeur d'application (P2) et le dispositif externe, par l'intermédiaire du contrôleur de communication (P1),
- une étape d'envoi de données de transaction du dispositif de transaction vers le dispositif externe ou du dispositif externe vers le dispositif de transaction, et
- une étape consistant à demander (S25, S25', S32) à l'utilisateur d'entrer des données de transaction (ATD), via le dispositif d'entrée (ID),
**caractérisé en ce qu'**il comprend des étapes conduites par le contrôleur de communication, consistant à :
- capturer et mémoriser (L03) les données de transaction (ATD) entrées par l'utilisateur,
- surveiller (L04, L40) les données de transaction à envoyer au dispositif externe ou reçues du dispositif externe, et
- refuser d'envoyer (S10) les données de transaction (TD) au dispositif externe si elles sont différentes des données de transaction entrées par l'utilisateur (ATD), ou rejeter (S113) les données de transaction reçues (TD) si elles sont différentes des données de transaction entrées par l'utilisateur (ATD).

2. Procédé selon la revendication 1, comprenant une étape consistant à interrompre la transaction au lieu d'empêcher les données de transaction d'être envoyées ou de rejeter les données de transaction reçues.

3. Procédé selon l'une des revendications 1 et 2, comprenant une étape consistant à appliquer (S24, S31) au contrôleur de communication une commande (ATDR) lui demandant de capturer et mémoriser les données de transaction entrées par l'utilisateur, avant de demander (S25, S25', S32) à l'utilisateur d'entrer les données de transaction (ATD).

4. Procédé selon l'une des revendications 1 à 3, comprenant les étapes consistant à :
- appliquer (S27) une commande spécifique (SEND_TD) au contrôleur de communication lorsque des données de transaction doivent être envoyées au dispositif externe, et fournir au contrôleur de communication les données de transaction à envoyer (TD),
- configurer le contrôleur de communication de telle sorte qu'en réponse à la commande il surveille les données de transaction, puis envoie les données de transaction au moyen d'une encapsulation spécifique ou de données d'accompagnement spécifiques ({y[TD]y}, {x[TD]y}, {y[TD]x}) si les données de transaction (TD) à envoyer sont identiques aux données de transaction entrées par l'utilisateur (ATD).

5. Procédé selon la revendication 4, comprenant une étape consistant à configurer le dispositif externe (ED) de telle sorte qu'il refuse les données de transaction qui ne sont pas encapsulées dans des données d'encapsulation spécifiques ({y[TD]y}, {x[TD]y}, {y[TD]x}) ou accompagnées de données d'accompagnement spécifiques.

6. Procédé selon l'une des revendications 1 à 3, comprenant les étapes consistant à :
- envoyer des données de transaction au dispositif de transaction au moyen d'une trame de données spécifique (Get_Processing_Options),
- en réponse à la réception de la trame de données spécifique, comparer les données de transaction (TD) présentes dans la trame spécifique aux données de transaction entrées par l'utilisateur (ATD), au moyen du contrôleur de communication.

7. Dispositif de transaction (2, 3) comprenant un contrôleur de communication (P1), un processeur d'application (P2) pour réaliser des transactions avec un dispositif externe (ED) par l'intermédiaire du contrôleur de communication (P1), et un dispositif d'entrée (ID), le contrôleur de communication (P1) étant un contrôleur NFC configuré pour échanger des données avec le dispositif externe (ED) via une liaison de données sans contact (CDL), le dispositif de transaction étant configuré pour demander (S25, S25', S32) à l'utilisateur d'entrer des données de transaction (ATD) via le dispositif d'entrée (ID) lors d'une transaction,
**caractérisé en ce que** le contrôleur de communication (P1) est configuré pour :
- capturer et mémoriser (L03) les données de transaction (ATD) entrées par l'utilisateur,
- surveiller (L04, L40) les données de transaction (TD) à envoyer au dispositif externe ou reçues du dispositif externe, et
- refuser d'envoyer (S10) les données de transaction (TD) au dispositif externe si elles sont différentes des données de transaction entrées par l'utilisateur (ATD), ou rejeter (S113) les données de transaction reçues (TD) si elles sont différentes des données de transaction entrées par l'utilisateur (ATD).

8. Dispositif de transaction selon la revendication 7, **caractérisé en ce que** le contrôleur de communication est configuré pour interrompre une transaction (S10, S113) lorsque les données de transaction (TD) à envoyer sont différentes des données de transaction entrées par l'utilisateur (ATD), ou lorsque les données de transaction reçues (TD) sont différentes des données de transaction entrées par l'utilisateur (ATD).

9. Dispositif de transaction selon l'une des revendications 7 et 8, dans lequel le processeur d'application est configuré pour demander (S25, S25', S32) à l'utilisateur d'entrer les données de transaction (ATD) et pour appliquer (S24, S31) au contrôleur de communication une commande (ATDR) lui demandant de capturer et de mémoriser les données de transaction entrées par l'utilisateur, avant de demander à l'utilisateur d'entrer des données de transaction.

10. Dispositif de transaction selon l'une des revendications 7 à 9, dans lequel :
- le processeur d'application est configuré pour appliquer (S27) une commande spécifique (SEND_TD) au contrôleur de communication lorsque des données de transaction doivent être envoyées au dispositif externe, et fournir au contrôleur de communication les données de transaction à envoyer (TD), et
- le contrôleur de communication est configuré pour surveiller les données de transaction en réponse à la commande spécifique, puis envoyer les données de transaction (S11) au moyen d'une encapsulation spécifique ou de données d'accompagnement spécifiques ({y[TD]y}, {x[TD]y}, {y[TD]x}) si les données de transaction (TD) à envoyer sont identiques aux données de transaction entrées par l'utilisateur (ATD).

11. Dispositif de transaction selon l'une des revendications 7 à 10, dans lequel le contrôleur de communication est configuré pour, en réponse à la réception d'une trame de données spécifique (Get_Processing_Options) comprenant des données de transaction (TD), comparer (S116) les données de transaction (TD) présentes dans la trame spécifique aux données de transaction entrées par l'utilisateur (ATD).

12. Dispositif de transaction selon l'une des revendications 7 à 11, dans lequel le processeur d'application (P2) est un processeur de bande de base d'un téléphone portable ou le processeur principal d'un assistant numérique personnel.

13. Système de transaction, comprenant un dispositif de transaction selon l'une des revendications 7 à 12 et un dispositif externe (ED) configuré pour réaliser une transaction avec le dispositif de transaction (2, 3).

14. Système de transaction selon la revendication 13, dans lequel le dispositif externe est configuré pour refuser des données de transaction qui ne sont pas encapsulées dans des données d'encapsulation spécifiques ({y[TD]y}, {x[TD]y}, {y[TD]x}) ou accompagnées de données d'accompagnement spécifiques.

15. Système de transaction selon l'une des revendications 13 et 14, dans lequel le dispositif externe (ED) est configuré pour envoyer des données de transaction au dispositif de transaction au moyen d'une trame de données spécifique (Get_Processing_Options).

## Patentansprüche

1. Verfahren zum Schutz einer Transaktion zwischen einer Transaktionseinrichtung (2, 3) und einer externen Einrichtung (ED), wobei die Transaktionseinrichtung eine Kommunikationssteuerung (P1), einen Anwendungsprozessor (P2) und eine Eingabeeinrichtung (ID) umfasst, wobei die Kommunikationssteuerung (P1) eine NFC-Steuerung ist, die konfiguriert ist, um Daten mit der externen Einrichtung (ED) über eine kontaktlose Datenverbindung (CDL) auszutauschen, wobei die Transaktion umfasst:
- Schritte zum Austausch von Anwendungsdaten zwischen dem Anwendungsprozessor (P2) und der externen Einrichtung mittels der Kommunikationssteuerung (P1),
- einen Schritt zur Verschickung von Transaktionsdaten von der Transaktionseinrichtung zu dem externen Gerät oder von dem externen Gerät an die Transaktionseinrichtung, und
- einen Schritt, der darin besteht, den Benutzer aufzufordern (S25, S25', S32), Transaktionsdaten (ATD) über die Eingabeeinrichtung (ID) einzugeben,
**dadurch gekennzeichnet, dass** es Schritte umfasst, die durch die Kommunikationssteuerung durchgeführt werden, die bestehen in:
- Erfassen und Speichern (L03) der Transaktionsdaten (ATD), die von dem Benutzer eingegeben wurden,
- Überwachen (L04, L40) der Transaktionsdaten, die an die externe Einrichtung zu senden sind oder von dem externen Gerät empfangen wurden, und
- Verweigern des Sendens (S10) der Transaktionsdaten (TD) zu der externen Einrichtung, wenn sie von den Transaktionsdaten (ATD) unterschiedlich sind, die von dem Benutzer eingegeben wurden, oder Zurückweisen (S113) der empfangenen Transaktionsdaten (TD), wenn sie von den Transaktionsdaten (ATD) unterschiedlich sind, die von dem Benutzer eingegeben wurden.

2. Verfahren nach Anspruch 1, das einen Schritt umfasst, der darin besteht, die Transaktion zu unterbrechen, anstatt zu verhindern, dass die Transaktionsdaten gesendet werden, oder die empfangenen Transaktionsdaten zurückzuweisen.

3. Verfahren nach einem der Ansprüche 1 und 2, das einen Schritt umfasst, der darin besteht, auf die Kommunikationssteuerung einen Befehl (ATDR) anzuwenden (S24, S31), der diese auffordert, die genehmigten Transaktionsdaten, die von dem Benutzer eingegeben wurden, zu erfassen und zu speichern, bevor der Benutzer aufgefordert wird (S25, S25' , S32), die Transaktionsdaten (ATD) einzugeben.

4. Verfahren nach einem der Ansprüche 1 bis 3, das die Schritte umfasst, die darin bestehen:
- Anwenden (S27) eines spezifischen Befehls (SEND_TD) auf die Kommunikationssteuerung, während Transaktionsdaten an die externe Einrichtung gesendet werden müssen, und Schicken von den zu sendenden Transaktionsdaten (TD) an die Kommunikationssteuerung,
- Konfigurieren der Kommunikationssteuerung derart, dass sie als Reaktion auf den Befehl die spezifischen Transaktionsdaten überwacht und dann die Transaktionsdaten mittels einer spezifischen Einkapselung oder spezifischer Begleitdaten ({y [TD] y}, {x [TD] y}, {y [TD] x}) sendet, wenn die zu sendenden Transaktionsdaten (TD) identisch mit den Transaktionsdaten (ATD) sind, die von dem Benutzer eingegeben wurden.

5. Verfahren nach Anspruch 4, das einen Schritt umfasst, der darin besteht, das externe Gerät zu konfigurieren (ED), so dass es die Transaktionsdaten zurückweist, die nicht in spezifischen Einkapselungsdaten ({y [TD] y}, {x [TD] y}, {y [TD] x}) eingekapselt sind oder von spezifischen Begleitdaten begleitet werden.

6. Verfahren nach einem der Ansprüche 1 bis 3, das die Schritte umfasst, die bestehen in:
- Senden von Transaktionsdaten an die Transaktionseinrichtung mittels eines spezifischen Datenrahmens (Get_Processing_Options),
- als Reaktion auf den Empfang des spezifischen Datenrahmens Vergleichen der Transaktionsdaten (TD), die in dem bestimmten Rahmen vorhanden sind, mit den Transaktionsdaten (ATD), die von dem Benutzer eingegeben wurden, mittels der Kommunikationssteuerung.

7. Transaktionseinrichtung (2, 3), die eine Kommunikationssteuerung (P1), einen Anwendungsprozessor (P2), um Transaktionen mit einem externen Gerät (ED) mittels der Kommunikationssteuerung (P1) durchzuführen, und eine Eingabeeinrichtung (ID) umfasst, wobei die Kommunikationssteuerung (P1) eine NFC-Steuerung ist, die konfiguriert ist Daten mit der externen Einrichtung (ED) über eine kontaktlose Datenverbindung (CDL) auszutauschen, wobei die Transaktionseinrichtung konfiguriert ist, den Benutzer aufzufordern (S25, S25', S32), Transaktionsdaten (ATD) über die Eingabeeinrichtung (ID) während einer Transaktion einzugeben, **dadurch gekennzeichnet, dass** die Kommunikationssteuerung (P1) konfiguriert ist zum:
- Erfassen und Speichern (L03) der Transaktionsdaten (ATD), die von dem Benutzer eingegeben wurden,
- Überwachen (L04, L40) der Transaktionsdaten, die an die externe Einrichtung zu senden sind oder von der externen Einrichtung empfangen wurden, und
- Verweigern des Sendens (S10) der Transaktionsdaten (TD) zu der externen Einrichtung, wenn sie von den Transaktionsdaten (ATD) unterschiedlich sind, die von dem Benutzer eingegeben wurden, oder Zurückweisen (S113) der empfangenen Transaktionsdaten (TD), wenn sie von den Transaktionsdaten (ATD) unterschiedlich sind, die von dem Benutzer eingegeben wurden.

8. Transaktionsverfahren nach Anspruch 7, **dadurch gekennzeichnet, dass** die Kommunikationssteuerung konfiguriert ist, eine Transaktion (S10, S113) zu unterbrechen, wenn die zu sendenden Transaktionsdaten (TD) verschieden von den Transaktionsdaten (ATD) sind, die von dem Benutzer eingegeben wurden, oder wenn die empfangenen Transaktionsdaten (TD) verschieden von den Transaktionsdaten (ATD) sind, die von dem Benutzer eingegeben wurden.

9. Verfahren nach einem der Ansprüche 7 und 8, wobei der Anwendungsprozessor konfiguriert ist, den Benutzer aufzufordern (S25, S25', S32), die Transaktionsdaten (ATD) einzugeben und auf die Kommunikationssteuerung einen Befehl (ATDR) anzuwenden (S24, S31), der ihr befiehlt, die Transaktionsdaten, die von dem Benutzer eingegeben wurden, zu erfassen und zu speichern, bevor der Benutzer aufgefordert wird, die Transaktionsdaten einzugeben.

10. Verfahren nach einem der Ansprüche 7 bis 9, in dem:
- der Anwendungsprozessor so konfiguriert ist, einen spezifischen Befehl (SEND_TD) auf die Kommunikationssteuerung anzuwenden (S27), während Transaktionsdaten an die externe Einrichtung gesendet werden müssen, und die zu sendenden Transaktionsdaten (TD) an die Kommunikationssteuerung zu schicken, und
- die Kommunikationssteuerung konfiguriert ist, als Reaktion auf den Befehl die spezifischen Transaktionsdaten (S11) zu überwachen und dann die Transaktionsdaten mittels einer spezifischen Einkapselung oder spezifischer Begleitdaten ({y [TD] y}, {x [TD] y}, {y [TD] x}) zu senden, wenn die Transaktionsdaten (TD) identisch mit den Transaktionsdaten (ATD) sind, die von dem Benutzer eingegeben wurden.

11. Verfahren nach einem der Ansprüche 7 bis 10, wobei die Kommunikationssteuerung konfiguriert ist, als Antwort auf den Empfang eines spezifischen Datenrahmens (Get_Processing_Options), der Transaktionsdaten (TD) umfasst, die Transaktionsdaten (TD), die in dem spezifischen Rahmen vorhanden sind, mit den Transaktionsdaten (ATD) zu vergleichen (S116), die von dem Benutzer eingegeben wurden.

12. Verfahren nach einem der Ansprüche 7 bis 11, wobei der Anwendungsprozessor (P2) ein Basisband-Prozessor eines Mobiltelefons oder der Hauptprozessor eines Personal Digital Assistants ist.

13. Transaktionssystem, das eine Transaktionseinrichtung nach einem der Ansprüche 7 bis 12 und eine externe Einrichtung (ED) umfasst, die konfiguriert ist, eine Transaktion mit der Transaktionseinrichtung (2, 3) durchzuführen.

14. Transaktionssystem gemäß Anspruch 13, wobei die externe Einrichtung eingerichtet ist, die Transaktionsdaten zurückzuweisen, die nicht in spezifischen Einkapselungsdaten ({y [TD] y} x {[TD] y}, {y [TD] x}) eingekapselt sind oder von spezifischen Begleitdaten begleitet werden.

15. Transaktionssystem nach einem der Ansprüche 13 und 14, wobei die externe Einrichtung (ED) konfiguriert ist, Anwendungsdaten an die Transaktionseinrichtung mittels eines spezifischen Datenrahmens (Get_Processing_Options) zu senden.

## Claims

1. A method for securing a transaction between a transaction device (2, 3) and an external device (ED), the transaction device comprising a communication controller (P1), an application processor (P2), and an input device (ID), the communication controller (P1) being an NFC controller configured to transmit data to the external device (ED) via a contactless data link (CDL), the transaction comprising:
- steps of transmitting transaction application data between the application processor (P2) and the external device, through the communication controller (P1)
- a step of sending transaction data from the transaction device to the external device or from the external device to the transaction device, and
- a step of requiring (S25, S25', S32) the user to enter transaction data (ATD) via the input device (ID),
**characterized in that** it comprises the steps performed by the communication controller, consisting of:
- capturing and memorizing (L03) the transaction data entered by the user,
- monitoring (L04, L40) the transaction data to be sent to the external device or received from the external device; and
- refusing to send (S10) the transaction data (TD) to the external device if they are different from the transaction data entered by the user (ATD), or rejecting (S113) the received transaction data (TD) if they are different from the transaction data entered by the user (ATD).

2. The method according to claim 1, comprising a step of interrupting the transaction instead of preventing transaction data from being sent or of rejecting the received transaction data.

3. The method according to one of claims 1 and 2, comprising a step of applying (S24, S31) to the communication controller a command (ATDR) requesting it to capture and memorize the transaction data, before requiring (S25, S25', S32) the user to enter transaction data (ATD).

4. A method according to one of claims 1 to 3, comprising the steps of:
- applying (S27) a specific command (SEND_TD) to the communication controller when transaction data are to be sent to the external device, and providing the communication controller with the transaction data to be sent (TD),
- configuring the communication controller so that it monitors the transaction data in response to said command, and then sending the transaction data using a specific encapsulation or accompanying data ({y[TD]y}, {x[TD]y}, {y[TD]x}) if the transaction data (TD) to be sent are identical to the transaction data entered by the user (ATD).

5. The method according to claim 4, comprising a step of configuring the external device (ED) so that it refuses transaction data that are not encapsulated with specific encapsulation data ({y[TD]y}, {x[TD]y}, {y[TD]x})or accompanied with specific accompanying data.

6. The method according to one of claims 1 to 3, comprising the steps of:
- sending application data to the transaction device using a specific data frame (Get_Processing_Options),
- in response to the reception of said specific data frame, comparing the transaction data (TD) present in said specific frame to the transaction data entered by the user(ATD) by means of the communication controller.

7. A transaction device (2, 3) comprising a communication controller (P1), an application processor (P2) to perform transactions with an external device (ED) through the communication controller (P1), and an input device (ID), the communication controller (P1) being an NFC controller configured to transmit data to the external device (ED) via a contactless data link (CDL), the transaction device being configured to require (S25, S25', S32) the user to enter transaction data (ATD) via the input device (ID) in the course of a transaction,
**characterized in that** the communication controller (P1) is configured to:
- capture and memorize (L03) the transaction data entered by the user (ATD),
- monitor (L04, L40) the transaction data (TD) to be sent to the external device or received from the external device, and
- refuse (S10) to send transaction data (TD) to the external device if they are different from the transaction data entered by the user (ATD), or reject (S113) received transaction data (TD) if they are different from the transaction data entered by the user (ATD).

8. The transaction device according to claim 7, **characterized in that** communication controller is configured for interrupting a transaction (S10, S113) when the transaction data (TD) to be sent are different from the transaction data entered by the user (ATD), or when the received transaction data (TD) are different from the transaction data entered by the user (ATD).

9. The transaction device according to one of claims 7 to 8, wherein the application processor is configured to require (S25, S25', S32) the user to enter transaction data (ATD) and to apply (S24, S31) to the communication controller a command (ATDR) requesting it to capture and memorize the transaction data entered by the user, before requiring the user to enter transaction data.

10. The transaction device according to one of claims 7 to 9, wherein:
- the application processor is configured to apply (S27) a specific command (SEND_TD) to the communication controller when transaction data are to be sent to the external device, and to provide the communication controller with the transaction data to be sent (TD), and
- the communication controller is configured to monitor the transaction data in response to said specific command, and then send the transaction data (S11) using specific encapsulation or specific accompanying data ({y[TD]y}, {x[TD]y}, {y[TD]x}) if the transaction data (TD) to be sent are identical to the transaction data entered by the user (ATD).

11. The transaction device according to one of claims 7 to 10, wherein the communication controller is configured to, in response to the reception of a specific data frame (Get_Processing_Options) comprising transaction data (TD), compare (S116) the transaction data (TD) present in said specific frame to the transaction data entered by the user (ATD).

12. The transaction device according to one of claims 7 to 11, wherein the application processor (P2) is a baseband processor of a mobile phone or the main processor of a Personal Digital Assistant.

13. A transaction system, comprising a transaction device according to one of claims 7 to 12 and an external device (ED) configured to perform a transaction with the transaction device (2, 3).

14. A transaction system according to claim 13, wherein the external device is configured to refuse transaction data that are not encapsulated with specific encapsulation data ({y[TD]y}, {x[TD]y}, {y[TD]x}) or accompanied with specific accompanying data.

15. A transaction system according to one of claims 13 and 14, wherein the external device (ED) is configured to send transaction data to the transaction device using a specific data frame (Get_Processing_Options).
